# EUROPÄISCHE PATENTSCHRIFT

(11) **EP 1 415 445 B1**
(45) Veröffentlichungstag und Bekanntmachung des Hinweises auf die Patenterteilung: **11.01.2012**
(21) Anmeldenummer: 02754507.8
(22) Anmeldetag: 08.08.2002
(51) Int. Cl.: H04L 12/56

(54) **RESSOURCEN-MANAGEMENT ZUR KOORDINIERTEN DYNAMISCHEN ANPASSUNG DER DIENSTGÜTE VON IP-BASIERTEN NETZWERKDIENSTEN**
RESOURCE MANAGEMENT FOR THE CO-ORDINATED DYNAMIC ADAPTATION OF THE QUALITY OF SERVICE OF IP-BASED NETWORK SERVICES
GESTION DES RESSOURCES EN VUE DE L'ADAPTATION DYNAMIQUE COORDONNEE DE LA QUALITE DE SERVICE POUR DES SERVICES RESEAU BASES SUR IP

(30) Priorität: 09.08.2001 DE 10139146; 19.11.2001 DE 10156751
(43) Veröffentlichungstag der Anmeldung: 06.05.2004
(73) Patentinhaber: Nokia Siemens Networks GmbH & Co. KG, 81541 München (DE)
(72) Erfinder: NIEDERMEIER, Christoph, 80637 München (DE)
(86) Internationale Anmeldenummer: PCT/DE2002/002927
(87) Internationale Veröffentlichungsnummer: WO 2003/017585

(56) Entgegenhaltungen:
- MANVI S S ET AL: "Qos management by mobile agents in multimedia communication" PROCEEDINGS 11TH INTERNATIONAL WORKSHOP ON DATABASE AND EXPERT SYSTEMS APPLICATIONS, LONDON, UK, 4-8 SEPT 2000 , 4. - 8. September 2000, Seiten 407-411, XP010515527
- ALMESBERGER W ET AL: "SRP: a scalable resource reservation protocol for the Internet" COMPUTER COMMUNICATIONS, BUTTERWORTHS & CO. PUBLISHERS LTD, GB, Bd. 21, Nr. 14, 15. September 1998 (1998-09-15), Seiten 1200-1211, XP004146581 ISSN: 0140-3664
- GUEDES L A ET AL: "QoS agency: an agent-based architecture for supporting quality of service in distributed multimedia systems" PROTOCOLS FOR MULTIMEDIA SYSTEMS - MULTIMEDIA NETWORKING, 1997. PROCEEDINGS., IEEE CONFERENCE ON SANTIAGO, CHILE 24-27 NOV. 1997, LOS ALAMITOS, CA, USA,IEEE COMPUT. SOC, US, 24. November 1997 (1997-11-24), Seiten 204-212, XP010258849 ISBN: 0-8186-7916-6

## Beschreibung

Die Erfindung betrifft ein Ressourcen-Managementsystem sowie ein korrespondierendes Verfahren zur dynamischen Anpassung von Ressourcen zwischen Datenströmen in einem Netzwerk.

Die Übertragung von Sprache und anderen multimedialen Diensten wie etwa Video über IP-basierte mobile Netzwerke gewinnt zunehmend an Bedeutung ( z.B. VoIP oder Voice over IP), insbesondere angesichts der bevorstehenden Einrichtung von Mobilfunknetzen der 3. Generation (UMTS).

Die Abkürzung IP steht dabei für "Internet Protocol", ein Protokoll der TCP/IP-Familie auf Schicht 3 des OSI-Referenzmodells. IP ist für den verbindungslosen Transport von Daten vom Sender über mehrere Netze zum Empfänger zuständig, wobei keine Fehlererkennung oder -korrektur erfolgt, d.h. IP kümmert sich nicht um schadhafte oder verlorengegangene Pakete. Als zentrale datentragende Einheit wird im IP das Datagramm definiert, das eine Länge von bis zu 65535 Bytes haben kann.

IP wird von mehreren darüberliegenden Protokollen genutzt, hauptsächlich von TCP (Transmission Control Protocol, ein verbindungsorientiertes Transportprotokoll, das eine logische Vollduplex-Punkt-zu-Punkt-Verbindung ermöglicht), aber auch von UDP (User Datagram Protocol, ein verbindungsloses Anwendungsprotokoll zum Transport von Datagrammen der IP-Familie).

Zu übertragende Daten werden von solchen Protokollen oberhalb von IP entgegengenommen und vom Sender fragmentiert, d.h. in Datagramme zerlegt. Empfängerseitig werden diese wieder zusammengesetzt, wobei man von defragmentieren spricht. IP ist vom genutzten Medium unabhängig und gleichfalls für LANs (Local Area Networks), WANs (Wide Area Networks) sowie für mobile Netzwerke geeignet.

Allerdings ist in mobilen Netzwerken die für die Übertragung benötigte Bandbreite eine knappe Ressource, die zudem durch variable Auslastung der Mobilfunkzellen sowie durch Störungen auf der Luftschnittstelle zeitlichen Schwankungen unterworfen ist. Um eine möglichst optimale Ausnutzung der verfügbaren Ressourcen - dazu gehören neben der Übertragungsbandbreite im Netzwerk auch lokale Ressourcen auf mobilen Telekommunikationsendgeräten (wie z.B. die Prozessorleistung oder die verbleibende elektrische Energie der Batterie) - zu erreichen, ist es entscheidend, die jeweils aktiven Multimedia-Dienste entsprechend der Vorgaben des Nutzers dynamisch an die aktuelle Situation im Netzwerk sowie auf den Endgeräten anzupassen. Um eine solche Anpassung möglichst unterbrechungsfrei durchführen zu können, ist eine Koordination der Anpassung sowohl der betroffenen Anwendungen und Dienste als auch der Reservierung von Ressourcen auf den beteiligten Endgeräten sowie auf Netzelementen erforderlich.

Soweit derartige dynamische Anpassungen von Diensten derzeit überhaupt vorgenommen werden, basieren die dafür verwendeten Verfahren in der Regel auf einer strikten Trennung der Signalisierung auf der Anwendungsebene, auf der Dienstparameter wie z.B. geeignete Kodierungsverfahren zwischen den Endgeräten vereinbart werden, von der Signalisierung auf der Kontrollebene, auf der die Reservierung dafür benötigter Netzwerkressourcen ausgehandelt wird. Da die erforderliche Synchronisation der Aktivitäten auf den beiden Ebenen bei diesem Ansatz im Netzwerk nicht erreicht werden kann, muss sie auf den Endgeräten erfolgen. Der dabei anfallende Signalisierungsaufwand ist beträchtlich, insbesondere im Falle mangelnder Verfügbarkeit angeforderter Ressourcen im Netzwerk, da in diesem Fall Teile der Signalisierung unter Umständen mehrmals wiederholt werden müssen.

Ein typisches Beispiel für diesen bekannten Ansatz stellen die im sog. SIP many-folks-Draft der IETF spezifizierten Erweiterungen des SIP-Protokolls dar, die eine Integration der Anwendungssignalisierung basierend auf dem von der IETF standardisierten Session Initiation Protocol (SIP) mit der Reservierung von Netzwerkressourcen, die z.B. über das von der IETF standardisierte Resource Reservation Protocol (RSVP) oder ein ähnliches Protokoll abgewickelt wird, erlauben. Die Synchronisation zwischen den beiden Ebenen erfolgt gemäß dem genannten IETF-Draft ausschließlich auf den Endgeräten und ist nur durch eine Reihe zusätzlicher Nachrichten, die die ursprünglich einfache SIP-Signalisierung erheblich verkomplizieren und verlangsamen, zu erreichen.

Ein weiteres Problem im Zusammenhang mit dieser Art von Signalisierung besteht darin, dass bei der Vereinbarung von Dienstparametern zwischen den Endgeräten auf Anwendungsebene noch keine Information über die verfügbaren Netzwerkressourcen vorliegt. Deshalb kann die im Anschluss erfolgende Reservierung von Netzwerkressourcen durch Signalisierung auf der Kontrollebene scheitern, so dass die komplette Anpassungssequenz mit anderen Parametern solange wiederholt werden muss, bis eine geeignete Wahl getroffen wurde. Eine Kopplung der beiden Ebenen im Netzwerk kann diese Vorgänge deutlich verkürzen und damit eine schnellere Dienstanpassung ermöglichen.

Zusammenfassend lässt sich sagen, dass die dynamische Anpassung der Dienstgüte von Realzeitdiensten auf Basis derzeitiger Verfahren zwar prinzipiell möglich ist, sich aber infolge der fehlenden Koordination zwischen der Signalisierung auf Anwendungs- und Kontrollebene aufwendig und langwierig gestaltet, so dass eine unterbrechungsfreie Anpassung von Diensten nicht in optimaler Weise möglich ist.

Die Druckschrift MANVI S. S. et al. "QoS Management by Mobile Agents in Multimedia Communication" offenbart ein Verfahren zur dynamischen Anpassung von Ressourcen zwischen Datenströmen in einem Netzwerk mit wenigstens zwei Teilnehmern, insbesondere in Form von Endgeräten oder in Form von einem Endgerät und einem Netzwerk-Server, die in wenigstens einer Sitzung mit einem oder mehreren aktiven Echtzeit-Datenströmen über das Netzwerk kommunizieren, wobei ein verteiltes Ressourcen-Managementsystem mit jeweiligen Ressourcen-Brokern vorgesehen ist in Form von Teilnehmer-Ressourcen-Brokern sowie weiteren Netzwerk-Ressourcen-Brokern an Netzwerkknoten, wobei jeder Ressourcen-Broker als autonome Einheit diesem zugeordnete Ressourcen verwaltet und auf Verfügbarkeit überwacht, wobei Ressourcen-Broker entlang einer Verbindung entsprechend einer Netzwerktopologie kommunizieren, indem
- ein Ressourcen-Broker als Initiator eine Anforderung zur Anpassung von Ressourcen auslöst, die zwischen jeweils benachbarten Ressourcen-Brokern als Propagatoren einem Ressourcen-Broker als Terminator weitergeleitet wird, wobei
- im Zuge der Weiterleitung dieser Anforderung ein Propagator erforderliche Ressourcen ermittelt und falls verfügbar reserviert und falls verfügbar die Anforderung in Richtung eines Terminators weiterleitet, wobei für den Fall, dass eine Kette von Propagatoren einschließlich einem Terminator über die erforderlichen Ressourcen verfügt, eine positive Rückantwort an den Initiator erfolgt und wobei unter Ressourcen die jeweiligen Bandbreiten verstanden werden.

Aufgabe der vorliegenden Erfindung ist es daher, eine unterbrechungsfreie Methode zur Anpassung von Diensten zu schaffen, die darüber hinaus die geschilderten weiteren Nachteile bekannter Lösungen vermeidet.

Gemäß der Erfindung wird diese Aufgabe durch ein Verfahren zur dynamischen Anpassung von Ressourcen zwischen Datenströmen in einem Netzwerk mit wenigstens zwei Teilnehmern gelöst, insbesondere in Form von Endgeräten oder in Form von einem Endgerät und einem Netzwerk-Server, die in wenigstens einer Sitzung mit einem oder mehreren aktiven Echtzeit-Datenströmen über das Netzwerk kommunizieren. Dabei ist ein verteiltes Ressourcen-Managementsystem mit jeweiligen Ressourcen-Brokern in Form von Teilnehmer-Ressourcen-Brokern sowie weiteren Netzwerk-Ressourcen-Brokern an Netzwerkknoten vorgesehen, wobei jeder Ressourcen-Broker als autonome Einheit diesem zugeordnete Ressourcen verwaltet und auf Verfügbarkeit überwacht, wobei Ressourcen-Broker entlang einer Verbindung entsprechend einer Netzwerktopologie kommunizieren, indem
- ein Ressourcen-Broker als Initiator eine Anforderung zur Anpassung von Ressourcen auslöst, die zwischen jeweils benachbarten Ressourcen-Brokern als Propagatoren bis zu wenigstens einem Ressourcen-Broker als Terminator weitergeleitet wird, wobei
- im Zuge der Weiterleitung dieser Anforderung jeder Propagator erforderliche Ressourcen ermittelt und falls verfügbar reserviert und falls verfügbar die Anforderung in Richtung jedes Terminators weiterleitet, wobei für den Fall, dass jede Kette von Propagatoren einschließlich jedem Terminator über die erforderlichen Ressourcen verfügt, eine positive Rückantwort an den Initiator erfolgt, worauf
- dieser über die gleichen Propagatoren zu jedem Terminator eine Signalisierung sendet, auf die jeder dieser Propagatoren und Terminatoren die jeweils reservierten Ressourcen gemäß der Anforderung anpasst.

Die vorliegende Erfindung schafft auf diese Weise ein Verfahren zur koordinierten dynamischen Anpassung der Quality of Service (QoS) von IP-basierten Realzeitdiensten, das auf einem verteilten Framework aus.autonom agierenden Einheiten (sog. QoS Brokern) basiert.

Dabei hat es sich als vorteilhaft erwiesen, wenn auf eine Anforderung Ressourcen zunächst für einen begrenzten Zeitraum vorgebucht werden und erst im Fall einer positiven Rückantwort an den Initiator vergleichsweise längerfristig reserviert werden.

Weiter ist es günstig, wenn vorgebuchte und/oder reservierte Ressourcen für eine Übermittlung aktiver Datenströme solange beibehalten werden, bis die Signalisierung erfolgt, worauf solche vorgebuchten und/oder reservierten Ressourcen zur Anpassung freigegeben werden.

Erfindungsgemäß kann zwischen Initiator-getriebenen und Terminator-getriebenen Anpassungsvorgängen unterschieden werden. Bei einer Initiator-getriebenen dynamischen Anpassung von Ressourcen erfolgt auf dem Weg der Signalisierung vom Initiator über die beteiligten Propagatoren zu einem Terminator eine Anpassung reservierter Resourcen jeweils Propagator für Propagator bis zum Terminator vor einer jeweiligen Weitergabe der Signalisierung.

Bei einer Terminator-getriebenen dynamischen Anpassung von Ressourcen verläuft die Signalisierung vom Initiator über die beteiligten Propagatoren zu einem Terminator und auf dem gleichen Weg zurück zum Initiator. Eine Anpassung von Ressourcen erfolgt ausgehend vom Terminator auf dem Weg zurück zum Initiator.

Für einen Initiator hat es sich als günstig erwiesen, wenn dieser eine Anforderung zur Ressourcenanpassung auf einen internen oder externen Trigger auslöst, worauf der Initiator die Entscheidung über die Art der Anpassung trifft und zustimmende oder ablehnende Antworten von Propagatoren und Terminatoren empfängt.

Für einen Propagator hat es sich als günstig erwiesen, wenn dieser eine Anfrage von seinem Vorgänger in einer Kette von Propagatoren empfängt und diese Anfrage nach erfolgreicher Prüfung der Verfügbarkeit benötigter Ressourcen in seinem Zuständigkeitsbereich an seinen Nachfolger weiterleitet, worauf der Propagator auf zustimmende oder ablehnende Antwort dieses Nachfolgers wartet, bevor der Propagator diese Antwort kombiniert mit dem Ergebnis der eigenen Prüfung an seinen Vorgänger weiterleitet.

Für einen Terminator schließlich hat es sich als günstig erwiesen, wenn dieser Anfragen von dem vorangehenden Propagator einer Kette von Propagatoren empfängt und diese Anfrage nach erfolgreicher Prüfung der Verfügbarkeit benötigter Ressourcen in seinem Zuständigkeitsbereich mit einer zustimmenden, ansonsten mit einer ablehnenden Antwort an den vorangehenden Propagator beantwortet.

Wenn wenigstens ein Propagator eine Verzweigung der Anforderung zur Ressourcenanpassung und eine entsprechende Zusammenführung der Antworten und/oder eine Verzweigung der Signalisierung vornimmt, dann kann auch eine dynamische Anpassung von Ressourcen zwischen Datenströmen in einem Netzwerk mit mehreren in einer Konferenz kommunizierenden Teilnehmern erfolgen.

Nach einer weiter vorteilhaften Ausgestaltung der Erfindung umfassen Ressourcen Dienste und Anwendungen auf Teilnehmern oder im Netzwerk.

Ferner wird die Aufgabe der Erfindung durch ein Ressourcen-Managementsystem zur dynamischen Anpassung von Ressourcen zwischen Datenströmen in einem Netzwerk mit den folgenden Merkmalen gelöst:
- wenigstens zwei Teilnehmern, insbesondere in Form von Endgeräten oder in Form von einem Endgerät und einem Netzwerk-Server, die in wenigstens einer Sitzung mit einem oder mehreren aktiven Echtzeit-Datenströmen über das Netzwerk kommunizieren, mit
- jeweiligen Ressourcen-Brokern in Form von Teilnehmer-Ressourcen-Brokern sowie weiteren Netzwerk-Ressourcen-Brokern an Netzwerkknoten, wobei mit jedem Ressourcen-Broker als autonome Einheit diesem zugeordnete Ressourcen verwaltbar und auf Verfügbarkeit überwachbar sind, wobei Ressourcen-Broker entlang einer Verbindung entsprechend einer Netzwerktopologie kommunizieren, mit
- einem Ressourcen-Broker als Initiator, durch den eine Anforderung zur Anpassung von Ressourcen auslösbar ist, mit
- wenigstens einem Ressourcen-Broker als Terminator und mit
- einer Anzahl von benachbarten Ressourcen-Brokern zur Weiterleitung der Anforderung des Initiators in Richtung der Terminatoren, wobei
- im Zuge der Weiterleitung dieser Anforderung durch jeden Propagator erforderliche Ressourcen ermittelbar und falls verfügbar reservierbar sind, wobei
- für den Fall, dass jede Kette von Propagatoren einschließlich jedem Terminator über die erforderlichen Ressourcen verfügt, eine positive Rückantwort an den Initiator sendbar ist, worauf
- durch den Initiator über die gleichen Propagatoren zu jedem Terminator eine Signalisierung sendbar ist, auf die durch jeden dieser Propagatoren und Terminatoren die jeweils reservierten Ressourcen gemäß der Anforderung anpassbar sind.

Ein vorteilhafter Initiator zeichnet sich dadurch aus, dass eine Anforderung zur Ressourcenanpassung auf einen internen oder externen Trigger auslösbar ist, worauf durch den Initiator die Art der Anpassung vorgebbar und zustimmende oder ablehnende Antworten von Propagatoren und Terminatoren empfangbar sind.

Ein vorteilhafter Propagator zeichnet sich dadurch aus, dass Anfragen von dessen Vorgänger in einer Kette von Propagatoren empfangbar sind und solche Anfragen nach erfolgreicher Prüfung der Verfügbarkeit benötigter Ressourcen in seinem Zuständigkeitsbereich an seinen Nachfolger weiterleitbar sind, worauf durch den Propagator eine zustimmende oder ablehnende Antwort dieses Nachfolgers kombiniert mit dem Ergebnis der eigenen Prüfung an seinen Vorgänger weiterleitbar ist.

Ein vorteilhafter Terminator schließlich zeichnet sich dadurch aus, dass Anfragen von dem vorangehenden Propagator einer Kette von Propagatoren empfängbar sind und nach erfolgreicher Prüfung der Verfügbarkeit benötigter Ressourcen in seinem zuständigkeitsbereich mit einer zustimmenden, ansonsten mit einer ablehnenden Antwort an den vorangehenden Propagator beantwortbar sind.

Das im Folgenden näher beschriebene Verfahren gemäß der Erfindung löst das Problem der Anpassung von Realzeitdiensten mit Hilfe eines verteilten QoS Frameworks. Die Komponenten dieses Frameworks, sogenannte QoS Broker auf den Endgeräten sowie im Netzwerk, koordinieren die Bereitstellung und Aktivierung von Ressourcen auf den Endgeräten und Ressourcen im Netzwerk mit der Rekonfiguration von Anwendungen und Diensten.

Jeder QoS Broker bildet eine autonome Einheit, die ihm zugeordnete Ressourcen eigenständig verwaltet und ihre Verfügbarkeit und Auslastung durch periodisches Monitoring überwacht. Broker auf Endgeräten, im Folgenden Endsystem QoS Broker genannt, entlasten auf ihnen aufsetzende Anwendungen von Aufgaben wie Mobility Management (im Fall von mobilen Endgeräten), Verwaltung und Monitoring von lokalen Ressourcen, Verwaltung und Monitoring von Medienströmen sowie Verhandlungen mit anderen Brokern. Broker im Netzwerk, auch Network QoS Broker genannt, sind zuständig für Verwaltung und Monitoring von Netzwerkressourcen in den ihnen zugeordneten Netzwerkabschnitten (Access Netzwerke oder Teile von Core Netzwerken). Andere Spielarten von Brokern im Netzwerk sind z.B. zuständig für die Umkodierung von Medienströmen und die Verwaltung der dazu erforderlichen Ressourcen. Besonders komplexe Broker werden für die Koordinierung von Multimedia-Konferenzen benötigt.

Jeder Broker sorgt für ein integriertes Ressourcen bzw. QoS Management aller ihm zugeordneten Ressourcen. Durch gemeinsame Betrachtung aller über das jeweilige Gerät bzw. den jeweiligen Netzwerkabschnitt verlaufenden Medienströme ergibt sich die Möglichkeit, durch dynamische Anpassung von Medienströmen den Einsatz von Ressourcen zwischen Strömen der gleichen Sitzung oder sogar zwischen verschiedenen Sitzungen zu verlagern. Dadurch werden unter wechselnden Bedingungen auf den Endgeräten sowie im Netzwerk und unter Berücksichtigung von Präferenzen sowohl der Nutzer als auch der Netzwerkbetreiber jeweils optimale Resultate erzielt.

Die koordinierte Anpassung eines Medienstromes von einem Endgerät zum anderen erfolgt durch Verhandlungen hinsichtlich der QoS Anforderungen (Kodierungsverfahren und deren Parameter, benötigte Netzwerkressourcen etc.) zwischen jeweils benachbarten Qos Brokern entlang einer Verbindung. Jeder angesprochene Broker überprüft, ob die angeforderten Ressourcen in seinem Zuständigkeitsbereich verfügbar sind und somit eine entsprechende Anpassung der jeweiligen Medienströme erfolgen kann. Im Erfolgsfall wird die Signalisierung an den nächsten Broker in der Kette weitergeleitet, im anderen Fall wird die Zurückweisung der Anforderung an den vorhergehenden Broker signalisiert. Die Art und Weise der Signalisierung entlang der Kette der Broker sowie die damit verbundenen Zustandsübergänge in den einzelnen Brokern bilden den Kern des Verfahrens zur koordinierten Anpassung von Medienströmen.

Das erfindungsgemäße Verfahren basiert auf der Annahme, dass zwischen mindestens zwei Endgeräten beziehungsweise einem Endgerät und einem Server eine oder mehrere Sitzungen jeweils bestehend aus einem oder mehreren aktiven Medienströmen existieren. Beim Aufbau jeder Sitzung wurde im besten Falle ein sog. Capability Exchange, also ein Austausch der jeweiligen Fähigkeiten und Möglichkeiten zwischen allen an einer Sitzung beteiligten Endgeräten, vorgenommen. Die Kenntnis der Fähigkeiten der beteiligten Endgeräte kann die der Anpassung eines Medienstromes vorausgehenden Verhandlungen deutlich verkürzen, weil statische Randbedingungen wie z.B. dem Kommunikationspartner zur Verfügung stehende Kodierungsverfahren dem Endgerät, das den Anpassungsvorgang initiiert, schon bekannt sind und damit diesbezüglich langwierige Verhandlungen vermieden werden können. Dynamische Randbedingungen wie z.B. die in einem bestimmten Netzwerksegment aktuell verfügbare freie Bandbreite müssen dagegen bei jeder Anpassung neu bestimmt und berücksichtigt werden.

An der Durchführung der Anpassung sind die Broker auf den Endgeräten und im Netzwerk in jeweils einer von drei bereits weiter oben beschriebenen möglichen Rollen beteiligt:
- ein Initiator (ein Endsystem Broker oder ein Network Broker) initiiert ausgelöst durch einen internen oder externen Trigger eine Anpassungssequenz. Er trifft die Entscheidung über die Art der vorzunehmenden Anpassung, startet die erforderlichen Signalisierung an die beteiligten Network Broker und Endsystem Broker und empfängt deren zustimmende oder ablehnende Antworten.
- ein Propagator (ein Network Broker) empfängt Anfragen von seinem Vorgänger in der Kette der Broker und leitet diese nach erfolgreicher Prüfung seiner Möglichkeiten, ihnen in seinem eigenen Zuständigkeitsbereich zu entsprechen, an seine Nachfolger weiter. Anschließend wartet er auf deren zustimmende oder ablehnende Antworten und schickt eine entsprechende kombinierte Antwort an seinen Vorgänger. Falls jedoch die erforderlichen lokalen (eigenen) Ressourcen nicht zur Verfügung stehen, wird direkt eine entsprechende ablehnende Antwort an den Vorgänger geschickt; die Weiterleitung der Anfrage unterbleibt in diesem Fall.
- ein Terminator (ein Endsystem Broker) bildet das letzte Glied in der Kette der Broker. Er empfängt wie ein Propagator Anpassungsanfragen von seinem Vorgänger, stellt anhand einer Untersuchung seiner lokalen Ressourcen fest, ob er diesen entsprechen kann und schickt eine zustimmende oder ablehnende Antwort an seinen Vorgänger.

Während ein Anpassungsvorgang nur einen Initiator haben kann, können mehrere Propagatoren und Terminatoren beteiligt sein. Falls es sich beim Initiator um einen Network Broker handelt, ist unter Umständen eine gleichzeitige Signalisierung in Richtung mehrerer Terminatoren erforderlich. Ein Konferenzszenario mit mehreren Teilnehmern erfordert, dass mindestens ein Propagator eine Verzweigung der Signalisierung der Anforderungen und eine entsprechende Zusammenführung der Antworten vornimmt.

Die koordinierte Anpassung von Medienströmen erfolgt gemäß der Erfindung in zwei Phasen:
1) In einer "Vorbereitungsphase" werden die für den Anpassungsvorgang erforderlichen Ressourcen auf den Endgeräten und im Netzwerk ermittelt und deren Verfügbarkeit durch entsprechende Reservierungen sichergestellt. Wenn die Anfrage den Terminator erreicht hat und dort positiv beantwortet wurde, ist sichergestellt, dass alle für die Anpassung erforderlichen Ressourcen zur Verfügung stehen. Die im Zuge der Anfrage reservierten Ressourcen werden zunächst nur für einen begrenzten Zeitraum vorgebucht, um im Falle des Scheiterns der Anfrage schnell wieder für andere Sitzungen zur Verfügung zu stehen.
   Im Fall einer positiven Rückantwort werden sie dauerhaft reserviert, im Fall einer negativen Rückantwort dagegen sofort wieder frei gegeben. Während der Vorbereitungsphase werden alle Ressourcen, die für die Übermittlung der aktiven Medienströme im alten Modus benötigt werden, beibehalten. Sie werden erst im Zuge der eigentlichen Anpassung der Medienströme freigegeben.
2) Eine "Anpassungsphase" beginnt nach Abschluss der Vorbereitungsphase, also nachdem eine positive Antwort beim Initiator der Anpassungsanforderung angekommen ist. Zu diesem Zeitpunkt ist für alle Broker in der Signalisierungskette klar, dass alle für die Anpassung benötigten Ressourcen zur Verfügung stehen. Der Initiator startet eine zweite Signalisierungssequenz, die wiederum über alle Propagatoren zu den Terminatoren und zurück läuft. Im Zuge dieser Signalisierung wird die Anpassung der Anwendungen bzw. Dienste auf den Endgeräten bzw. der Reservierungen auf den Netzwerkknoten nun tatsächlich vorgenommen.

Dabei wird unterschieden zwischen Initiator-getriebenen und Terminator-getriebenen Anpassungsvorgängen. Initiatorgetriebene Anpassungsvorgänge erfolgen als Abfolge von Anpassungsvorgängen entlang der Kette der Broker, beginnend beim Initiator in Richtung auf die Terminatoren hin. Terminator-getriebene Anpassungsvorgänge erfolgen in der umgekehrten Richtung, beginnend bei den Terminatoren in Richtung des Initiators. Genaueres hierzu ist in einem an späterer Stelle ausführlich beschriebenen Ausführungsbeispiel erläutert. Komplexe Anpassungen, die mehrere Medienströme gleichzeitig betreffen, können als Mischung von Initiator- und Terminator-getriebenen Anpassungsvorgängen auftreten.

Die Vorteile dieses zweiphasigen Verfahrens sind u.a.:
Während der Vorbereitungsphase können alle Medienströme unbeeinträchtigt weiter übertragen werden. Anpassungen von Ressourcen (z.B. eine Reduzierung reservierter Bandbreite im Netzwerk) werden erst während der Anpassungsphase vorgenommen. Bei einer Erhöhung des Ressourcenbedarfs wird die Reservierung in der Vorbereitungsphase vorgenommen, um eine reibungslose Umstellung der Ströme in der Anpassungsphase zu garantieren.

Während der Anpassungsphase wird die Anpassung der Medienströme auf den Endgeräten und im Netzwerk immer so vorgenommen, dass der Übergang möglichst reibungslos erfolgt. Bei einer Erhöhung des Ressourcenbedarfs wird die Anpassung beginnend beim Empfänger des Medienstroms in Richtung auf den Sender hin vorgenommen, während bei einer Reduktion des Ressourcenbedarfs die Anpassungssequenz vom Sender des Medienstroms hin zum Empfänger läuft. Dadurch wird sichergestellt, dass vor der Anpassung vom Sender generierte Pakete des Medienstroms während des Anpassungsvorgangs noch unbeeinträchtigt zum Empfänger übertragen werden können und dass nach der Anpassung vom Sender generierte Pakete sofort nach der Umstellung des Senders ebenfalls unbeeinträchtigt beim Empfänger ankommen.

Die beschriebene zweiphasige Signalisierung erfordert im Falle einer erfolgreichen Anpassung von Medienströmen nur zwei vollständige Umläufe der Signalisierung. Selbst wenn zur Bestätigung der erfolgten Anpassung ggf. noch eine weitere Signalisierung vom Initiator zum Terminator erfolgt, bleibt die beschriebene Signalisierung mit zweieinhalb Umläufen deutlich unter dem Signalisierungsaufwand der weiter oben dargestellten herkömmlichen Vorgehensweise. Der Grund hierfür liegt in der Kombination der Signalisierungen für die Anwendungs- und Kontrollebene.

Weitere Vorteile und Details der Erfindung ergeben sich anhand der im Folgenden näher beschriebenen Ausführungsbeispiele und in Verbindung mit den Figuren. Es zeigen jeweils in Prinzipdarstellung:
- FIG 1: einen Anpassungszyklus eines Initiators,
- FIG 2: einen Anpassungszyklus eines Propagators,
- FIG 3: einen Anpassungszyklus eines Terminators,
- FIG 4: ein mögliches Punkt-zu-Punkt-Szenario mit einem integrierten, verteilten QoS Framework gemäß der Erfindung,
- FIG 5: ein mögliches Gateway-Szenario mit einem integrierten, verteilten QoS Framework gemäß der Erfindung,
- FIG 6: ein mögliches Konferenz-Szenario mit einem integrierten, verteilten QoS Framework gemäß der Erfindung,
- FIG 7: eine mögliche Struktur eines Endsystem QoS Brokers,
- FIG 8: ein Zustandsdiagramm für einen Initiator,
- FIG 9: ein Zustandsdiagramm für einen Propagator,
- FIG 10: ein Zustandsdiagramm für einen Terminator,
- FIG 11: ein Sequenzdiagramm für eine Zwei-Phasen-Anpassung gemäß der Erfindung allgemein und
- FIG 12: ein Sequenzdiagramm für den Spezialfall eines Downgrade eines Mediendatenstroms.

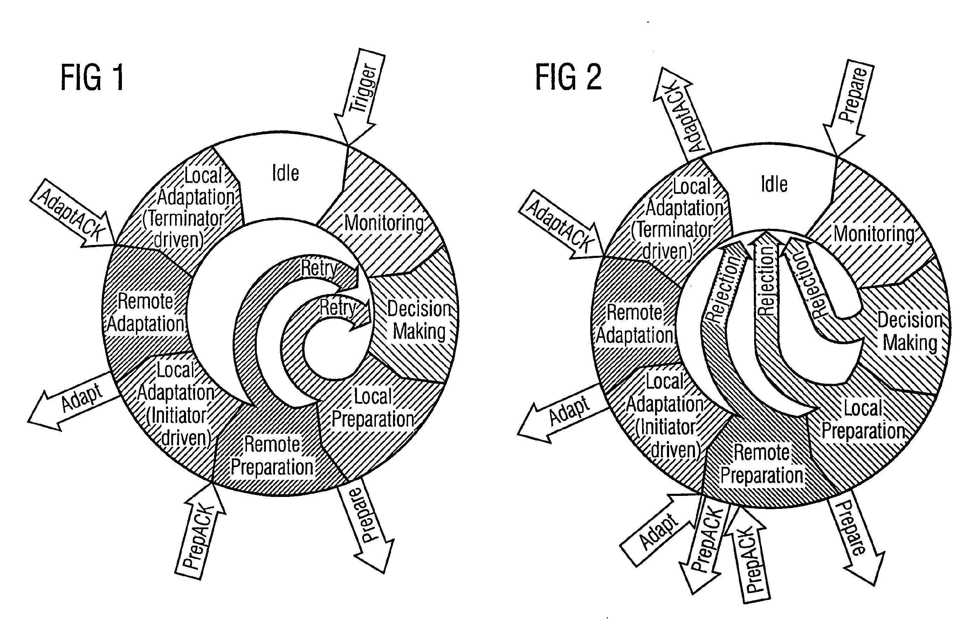

Die in FIG 1 bis FIG 3 dargestellten Diagramme zeigen schematisch die während der Vorbereitungs- und Anpassungsphasen auftretende Abfolge von Aktionen bei Initiator, Propagator und Terminator zusammen mit eingehenden und ausgehenden Nachrichten, die als Pfeile dargestellt sind. Dabei sind die allgemein geläufigen englischsprachigen Bezeichnungen zugrunde gelegt. Jedoch findet sich am Ende dieser Ausführungen eine entsprechende Synonymliste.

Alle drei Arten von Systemen befinden sich zunächst im Zustand "Idle". Ein Trigger führt den Initiator (vgl. FIG 1) in einen "Monitoring"-Zustand über, in dem Daten über den aktuellen Systemzustand gesammelt werden. Aufbauend auf diesen Daten werden im Zustand "Decision Making" die Parameter der vorzunehmenden Anpassung bestimmt. Nach Abschluss des lokalen Vorbereitungsschritts erfolgt durch Absenden einer "Prepare"-Nachricht an den nächsten Broker der Übergang in den Zustand "Remote Preparation". Der Empfang einer positiven Antwort ("PrepACK") leitet in die Anpassungsphase über. Falls einer der Vorbereitungsschritte nicht erfolgreich war, kann ein neuer Versuch unternommen werden, eine passende Entscheidung zu treffen ("Retry"). Die Anpassungsphase gliedert sich in die drei Schritte
- "Local Adaptation (Initiator driven)", an dessen Ende eine "Adapt"-Nachricht an die nachfolgenden Broker geschickt wird;
- "Remote Adaptation", der durch Empfang der Antwort "AdaptACK" abgeschlossen wird;
- "Local Adapation (Terminator driven").

Nach Abschluss der Anpassungsphase geht der Initiator wieder in den "Idle"-Zustand über.

Der in FIG 2 gezeigte entsprechende Anpassungszyklus eines Propagators unterscheidet sich von dem eines Initiators zunächst dadurch, dass der Übergang aus dem "Idle"-Zustand zum "Monitoring"-Zustand durch den Empfang einer "Prepare"-Nachricht ausgelöst wird. Ein Scheitern der Schritte "Decision Making", "Local Preparation" oder "Remote Preparation" führt zur Absendung einer ablehnenden Antwort sowie zu einem Übergang zurück in den "Idle"-Zustand. Nach Abschluss der Vorbereitungsphase durch Empfang einer positiven Antwort ("PrepACK") wird eine ebensolche Antwort an den Vorgänger geschickt. Der Übergang in die Anpassungsphase wird durch den Empfang einer "Adapt"-Nachricht ausgelöst. Die Anpassungsphase wird durch Abschicken einer Antwort ("AdaptACK") abgeschlossen.

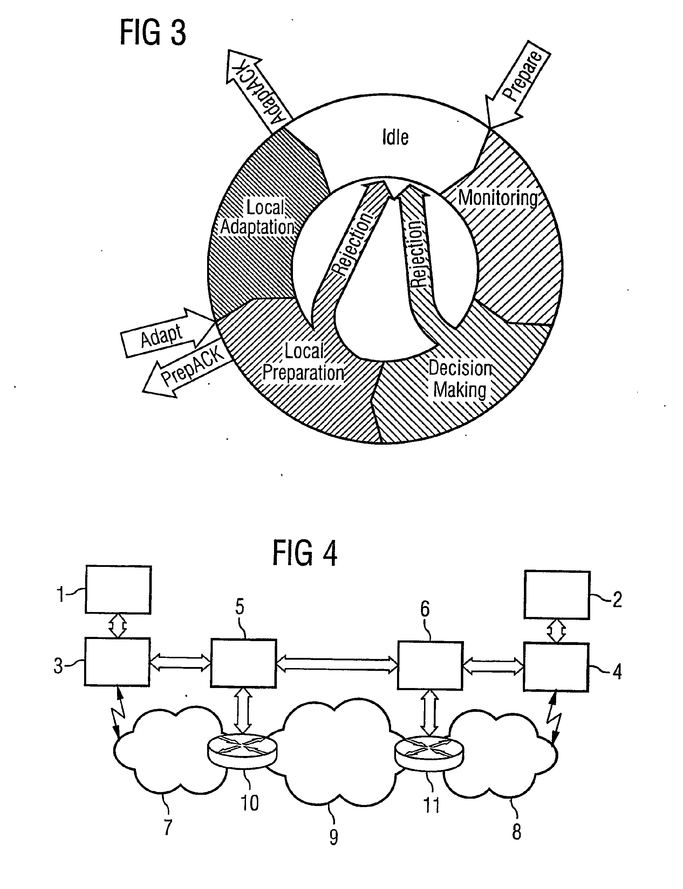

Der in der FIG 3 entsprechend dargestellte Anpassungszyklus eines Terminators ist deutlich einfacher gestaltet, da die Schritte "Remote Preparation" und "Remote Adaptation" entfallen und somit keine Nachrichten weitergeleitet werden müssen. Außerdem besteht die Anpassungsphase nur aus einem einzigen lokalen Anpassungsschritt.

Das beschriebene Verfahren gemäß der Erfindung erlaubt eine zeit-effiziente dynamische Anpassung der Dienstgüte von Medienströmen und anderen Realzeitdiensten auf Basis eines integrierten, verteilten QoS Frameworks. Der Schwerpunkt des Verfahrens liegt auf der Koordination der Zustandsübergänge der einzelnen Broker entlang der Signalisierungskette vom Initiator der Anpassung zu den Terminatoren und zurück.

Wesentliche Vorteile liegen vor allem in den folgenden Teilaspekten:
Die Integration von Anwendungs-spezifischer und Ressourcenspezifischer Signalisierung führt zu einer erheblichen Reduzierung des Signalisierungsaufwands, da keine separate Signalisierung zur Reservierung von Netzwerkressourcen erforderlich ist. Die Anzahl der Umläufe der Signalisierung zwischen den Endgeräten wird im Gegensatz zu herkömmlichen Verfahren deutlich reduziert.

Die Trennung der Signalisierung in zwei Phasen gestattet die Anpassung der erforderlichen Ressourcen in der Vorbereitungsphase, ohne die Übertragung der Medienströme zunächst zu beinträchtigen. Erst wenn die Vorbereitungsphase abgeschlossen und die Verfügbarkeit der erforderlichen Ressourcen bei allen Brokern sichergestellt ist, erfolgt in der Anpassungsphase die Aktivierung der Ressourcen sowie die Anpassung der Applikationen und Dienste. Dadurch werden Unterbrechungen der Medienströme minimiert und so der Anpassungsprozess optimiert.

Die geeignete Wahl der Ausbreitungsrichtung des Anpassungsvorgangs minimiert Paketverluste während des Anpassungsvorgangs und trägt so ebenfalls zu dessen Optimierung bei.

Im Folgenden werden zunächst verschiedene mögliche Szenarien für den Einsatz eines erfindungsgemäßen verteilten QoS Frameworks beschrieben. Insbesondere wird erläutert, wie sich die Vernetzung verschiedener beteiligter Broker für die verschiedenen Szenarien darstellt. Anschließend wird beispielhaft eine mögliche Architektur für einen Endsystem QoS Broker vorgestellt. Anhand von Zustandsdiagrammen für die verschiedenen Rollen der Broker werden die im Rahmen eines Anpassungsvorganges auftretenden Zustandsübergänge diskutiert. Zuletzt wird für eine einfache Punkt-zu-Punkt-Verbindung wird die Signalisierung anhand von Sequenzdiagrammen für verschiedene Arten von Anpassung erläutert.

Einer der einfachsten Anwendungsfälle für das QoS-Framework ist in FIG 4 dargestellt. Das Diagramm zeigt eine Punkt-zu-Punkt-Verbindung zwischen zwei Anwendungen 1 und 2, die jeweils an einen auf dem Endgerät laufenden Endsystem QoS Broker 3 und 4 gekoppelt sind, der für die Anwendungen die Bereitstellung von Quality-of-Service sowie die mit der Anpassung von Medienströmen verbundenen Entscheidungsfindungsprozesse und Verhandlungen übernimmt.

Beide Endgeräte sind über mobile Access Netzwerke 7 und 8 mit einem Core Netzwerk 9 verbunden. In dem Beispiel sorgt je ein Network QoS Broker 5 und 6 an der Schnittstelle zwischen Access Netzwerk 7 bzw. 8 und Core Netzwerk 9 für das Bandbreitenmanagement im jeweiligen Access Netzwerk sowie für die Einhaltung der Service-Level-Agreements (SLAs) zwischen Access Netzwerk 7 bzw. 8 und Core Netzwerk 9.

Da angenommen wird, dass das Core Netzwerk die Einhaltung der SLAs durch ein eigenes Bandbreitenmanagement bzw. durch Over-Provisioning garantiert, benötigt man keine zusätzlichen Network QoS Broker im Core Netzwerk 9. Die beiden gezeigten Network QoS Broker sind über Interaktion mit Routern 10 und 11, die Access und Core Netzwerke miteinander verbinden, in der Lage, die Einhaltung der Reservierungsvereinbarung zu erzwingen. Ein Router wertet in den Datenpaketen enthaltene Adressierungsinformationen aus und ermittelt anhand von Routingtabellen den günstigsten weiteren Weg. Anhand dieser Information wird entschieden, was mit dem Datenpaket weiterhin geschieht.

Ein Anpassungsvorgang könnte zum Beispiel durch einen Endsystem QoS Broker 3 oder 4 initiert werden. Die Signalisierung läuft über die Network QoS Broker 5 und 6 zum Endsystem QoS Broker am anderen Ende der Verbindung und wieder zurück.

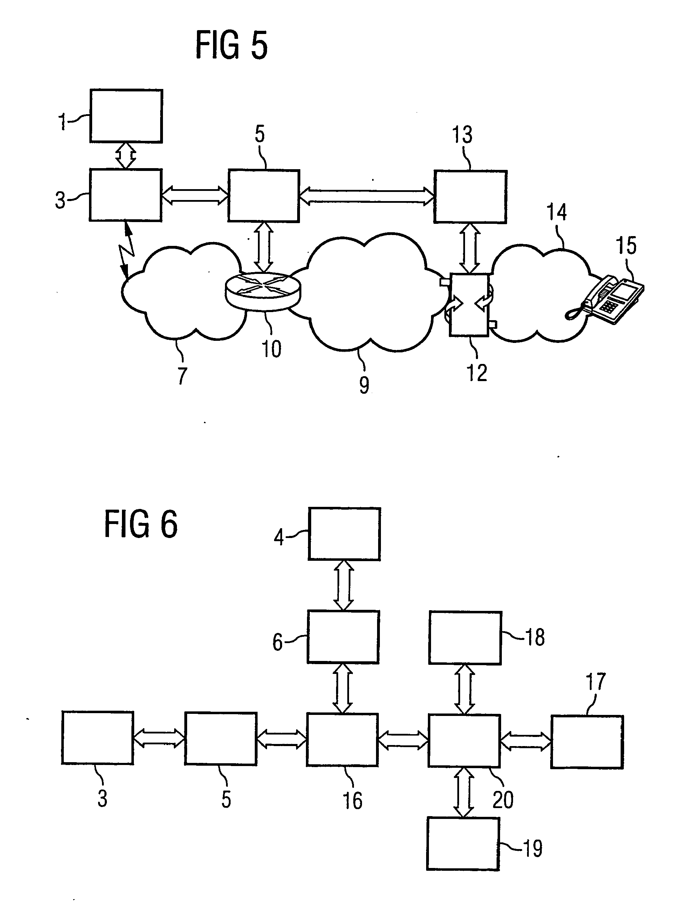

In FIG 5 ist die Kommunikation zwischen einer IP basierten Telephonie-Anwendung und einem konventionellen Telephon 15 dargestellt. Da das konventionelle Telephon 15 über ein Fernmeldenetz 14 keine Netzwerk-Signalisierung durchführen kann, wird es durch ein Gateway 12 an das Core Netzwerk 9 angekoppelt. Ein Transcoding QoS Broker 13 bildet anstelle eines Endsystem QoS Brokers den zweiten Endpunkt der Verbindung. Seine Aufgabe besteht in der Ansteuerung des Gateways 12, das den aus dem öffentlichen Telephonnetz erhaltenen Medienstrom in das vom Transcoding QoS Broker mit dem Endsystem QoS Broker ausgehandelte Medienformat umsetzt und vice versa. Eine Anpassungsanforderung des Endsystem QoS Brokers 3 wird über den Network QoS Broker 5 an den Transcoding QoS Broker 13 geschickt, der entsprechend der Fähigkeiten des ihm zugeordneten Gateways 12 auf die Anforderung reagiert.

Ein komplexes Konferenzszenario mit Verzweigungen ist in FIG 6 gezeigt. Zur Vereinfachung sind Anwendungen und Netzwerkelemente hier weggelassen; dargestellt sind lediglich ein Netzwerk der QoS Broker. Die Koordination der Konferenz wird von einem Conferencing QoS Broker 16 geleistet, mit dem die an der Konferenz beteiligten Endsystem QoS Broker 3, 4, 17, 18, 19 über Network QoS Broker 5, 6, 20 verbunden sind. Die Network QoS Broker sind wie schon in den vorangegangenen Beispielen für Admission und QoS Management in den jeweiligen Access Netzwerken zuständig.

In der rechten Hälfte von FIG 6 ist ein besonderer Network QoS Broker 20 dargestellt, dem mehrere Endsystem QoS Broker 17 bis 19 zugeordnet sind. Eine derartige Situation bietet die Möglichkeit, geeignete Medienströme (z.B. Videodaten zwischen Conferencing QoS Broker und Access Netzwerk nur einmal zu schicken (z.B. per Multicast) und dadurch Bandbreite zu sparen. Das ist allerdings nur dann möglich, wenn alle beteiligten Endsysteme die gleichen Medienformate verarbeiten können. Andernfalls muss der Conferencing QoS Broker 16 für eine geeignete Umsetzung der Medienströme (durch eine Transcoding Unit) sorgen.

Die Prozessierung einer Anpassungsanforderung hängt also in diesem Szenario davon ab, inwieweit verschiedene Medienformate verwendet werden. Bei Erhalt einer Anpassungsanforderung für einen Medienstrom entscheidet der Conferencing QoS Broker 16 in Abhängigkeit von den Antworten der angeschlossenen Endsysteme, ob er eine zusätzliche Umsetzung in ein anderes Medienformat durchführen muss bzw. ob eine bisher durchgeführte Umsetzung wegfallen kann.

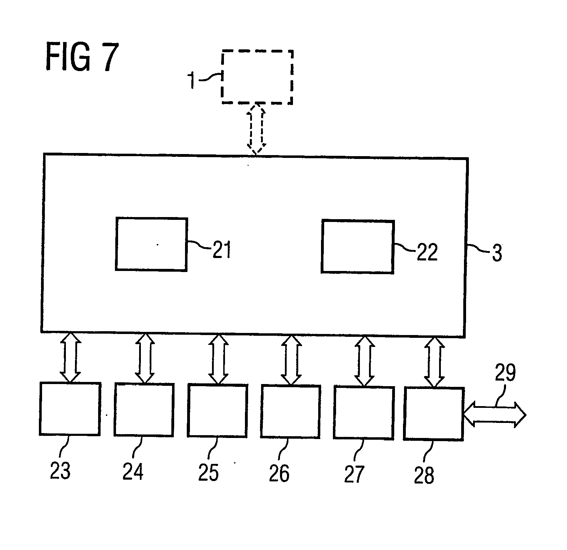

Eine mögliche Struktur eines integrierten Endsystem QoS Brokers ist in FIG 7 dargestellt. Der Broker integriert die Aktivitäten diverser Manager 21 bis 28 (z.B. einen Sitzungsmanager 21 und einen QoS Manager 22), die für verschiedene Belange zuständig sind. Beispielsweise kümmert sich der Mobility Manager 27 um das Monitoring der Signalstärken verschieden ner drahtloser Access Technologien und sorgt für die Umsetzung des Handoffs, falls der QoS Manager 22 sich für einen Wechsel der Access Technologie entscheidet. Der CPU Ressource Manager 24 ist für die Reservierung von Rechenzeit beim CPU Scheduler zuständig. Ein derartiges Vorgehen dient der Unterstützung rechenzeit-intensiver Teile der Anwendung bzw. des Media Streamings und ist Teil der lokalen QoS Maßnahmen auf dem Endsystem. Im Rahmen eines Anpassungsvorgangs auf dem Endsystem sind in der Regel mehrere Manager an den Schritten Monitoring, Local Preparation und Local Adaptation beteiligt. Aufgabe des Endsystem QoS Brokers ist die Koordination dieser lokalen Aktivitäten mit den über den Intercom Manager 28 abgewickelten Verhandlungen mit den übrigen an der Verbindung beteiligten Brokern über eine Schnittstelle 29 zu anderen Brokern.

Im Folgenden werden Realisierungen der Anpassungszyklen für die drei Broker-Rollen Initiator, Propagator und Terminator anhand von UML Zustandsdiagrammen vorgestellt (UML steht für Unified Modelling Language und bezeichnet eine weitverbreitete abstrakte Beschreibungssprache). Da die zur Bezeichnung von Zuständen verwendeten Terme allgemeinverständlich sind, werden diese direkt in den Diagrammen verwendet und brauchen somit nicht näher erläutert zu werden. Andernfalls würden die Diagramme nahezu unverständlich. Die Zustandsdiagramme konkretisieren die weiter oben anhand von FIG 1 bis FIG 3 erläuterten schematischen Anpassungszyklen durch Einführung von Zuständen, Triggern, Aktionen und Bedingungen für Zustandsübergänge.

Zustände, in denen auf eine Signalisierung aus dem Netzwerk gewartet wird, werden aus Stabilitätsgründen zusätzlich mit einem Timer versehen, der nach Verstreichen einer gewissen Zeit einen Übergang in den Standardzustand auslöst und damit den Anpassungszyklus abbricht. Diese Vorgehen dient dazu, dem Ausfall einer Netzwerkkomponente vorzubeugen. Die weitere Behandlung eines Timeout-Events muss unter Umständen die Terminierung der betroffene Sitzung oder gar der kompletten Anwendung in Betracht ziehen. Darauf wird jedoch im Rahmen dieses Ausführungsbeispiels nicht weiter eingegangen.

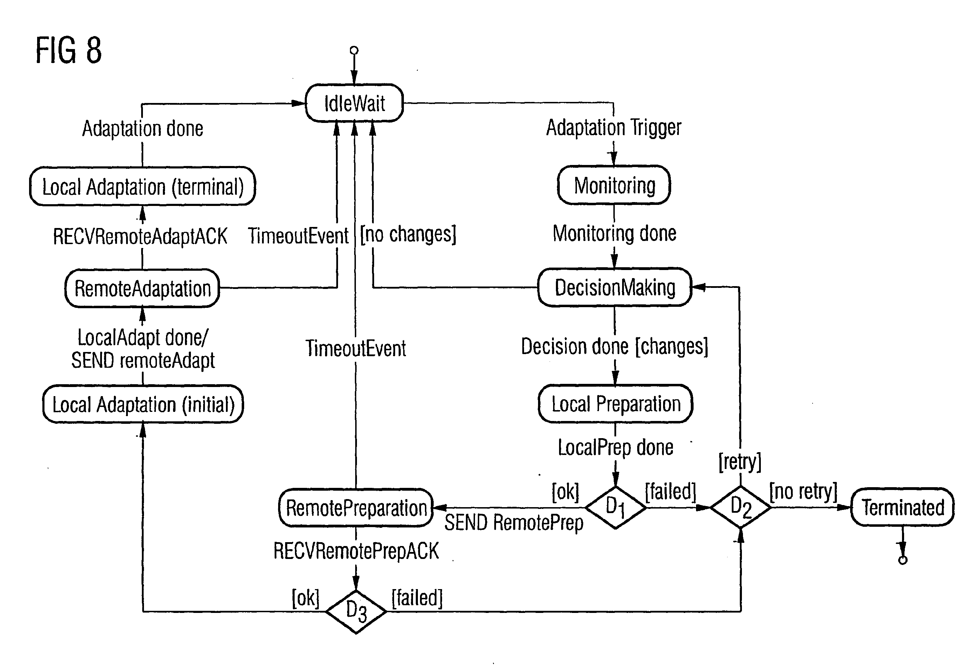

Die FIG 8 zeigt ein solches Zustandsdiagramm für den Initiator einer Anpassungsanforderung. Vor dem Start des Zyklus befindet sich das System im Ruhezustand "IdleWait". Ein Anpassungstrigger leitet die Vorbereitungsphase ein und führt das System zunächst in den Zustand "Monitoring" über. In diesem Zustand werden von zuständigen Managern Daten hinsichtlich der Auslastung der CPU, des Netzwerks, der tatsächlichen Qualität von Medienströmen gesammelt. Dieser Schritt kann entfallen, wenn QoS Monitoring sowieso periodisch stattfindet. In diesem Fall stehen die Daten sofort für den nächsten Schritt, die Entscheidungsfindung (Zustand "Decision Making"), für den der QoS Manager zuständig ist, zur Verfügung.

Ein mögliches Ergebnis dieses Schritts ist, dass keine Änderungen an den Medienströmen erforderlich sind. In diesem Fall erfolgt ein Übergang zurück in den Zustand "IdleWait"; der Zyklus wird damit abgebrochen. Im anderen Fall wird der lokale Vorbereitungsschritt gestartet, auf dessen Vollzug durch die zuständigen Manager das System im Zustand "Local Preparation" wartet. Der nächste Zustandsübergang hängt vom Resultat des Vorbereitungsschritts ab. Nur wenn alle erforderlichen lokalen Ressourcen tatsächlich verfügbar sind, wird die Vorbereitungsnachricht an nachfolgende Broker geschickt ("SENDRemotePrep") und damit der Zustand "Remote Preparation" erreicht.

Im Falle eines Scheitern des Vorbereitungsschritts kann unter Berücksichtigung der im lokalen Vorbereitungsschritt gewonnenen Informationen ein neuerlicher Entscheidungsschritt stattfinden. Eine Wiederholung des Entscheidungsschritts ist allerdings nur unter gewissen Umständen sinnvoll. Falls das System sich dagegen entscheidet ("no retry"), eine erfolgreiche Anpassung also nicht möglich ist, bleibt nur noch die Terminierung der Sitzung und somit der Übergang in den Zustand "Terminated".

Zwei Ereignisse erlauben das Verlassen des Zustands "Remote Preparation": Ein Timeout führt das System zurück in den Zustand "IdleWait", der Empfang einer Antwort auf die Vorbereitungsnachricht ("RECVRemotePrep") führt im Nichterfolgsfall zurück zur Entscheidungsfindung oder zur Terminierung, im Erfolgsfall hingegen zu einem Übergang in die Anpassungsphase. Diese beginnt mit dem Zustand "Local Adaptation (initial)", der andauert, bis die Initiator-getriebenen lokalen Anpassungsschritte vollzogen sind. Beim Übergang in den Zustand "Remote Adapation" wird eine Anpassungsnachricht an alle direkt nachfolgenden Broker geschickt. Das Verlassen des Zustands wird wie beim Zustand "Remote Preparation" entweder durch Empfang der Antworten aller direkt nachfolgenden Broker oder durch ein Timeout Ereignis ausgelöst. Im Zustand "Local Adapation (terminal)" werden die Terminator-getriebenen Anpassungschritte vollzogen. Nach deren Abschluss erfolgt der Übergang in den Wartezustand "IdleWait".

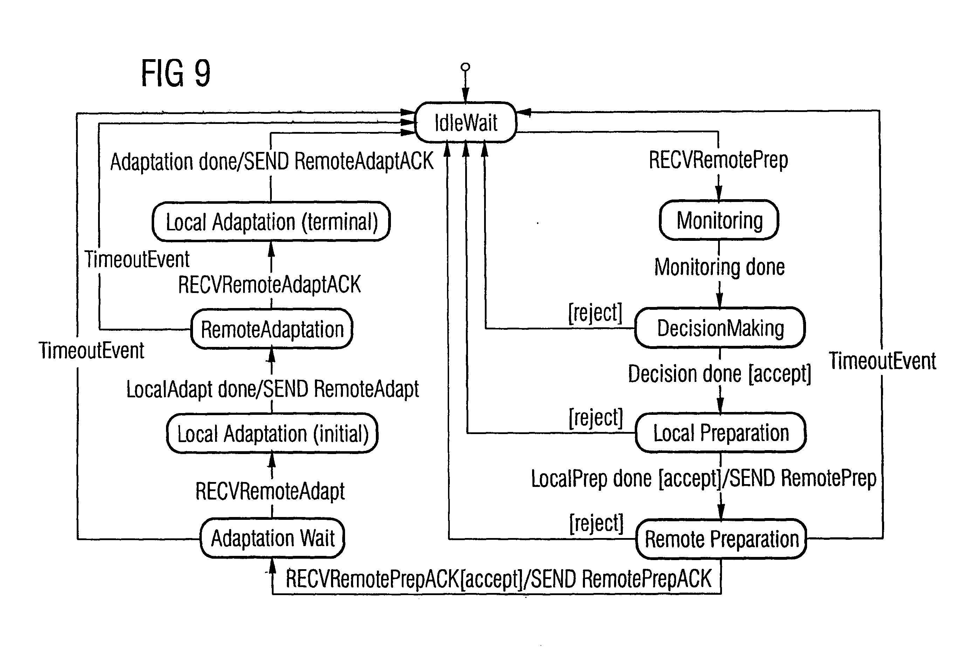

Die FIG 9 zeigt ein vergleichbares Zustandsdiagramm für einen Propagator. Der Übergang aus dem Ruhezustand "IdleWait" in den Zustand "Monitoring und damit der Beginn der Vorbereitungsphase wird durch den Empfang einer Vorbereitungsnachricht ("RECVRemotePrep") ausgelöst. Die Zustände "Decision Making", "Local Preparation" und "Remote Preparation", die nacheinander durchlaufen werden, werden im Falle des Scheiterns der jeweiligen mit ihnen verbundenen Aktion durch einen Übergang in den Ruhezustand verlassen.

Die Entscheidungsfindung im Zustand "Decision Making" dient hier im Gegensatz zum Initiator nicht der Festlegung eines möglichen Anpassungsschritts, sondern lediglich der Prüfung der Frage, ob die geforderte Anpassung mit lokalen Policy Rules bzw. vorhandenen Ressourcen verträglich ist oder nicht. Der Zustand "Remote Preparation" wird, ausgelöst durch ein Timeout Ereignis, durch einen Übergang in den Ruhezustand verlassen, falls die Antworten aller direkt nachfolgenden Broker auf die Vorbereitungsnachricht nicht innerhalb einer gewissen Zeitspanne eintreffen. Der Empfang positiver Antworten ("RECVRemotePrep") führt beim Propagator nicht sofort zum Beginn der Anpassungsphase, sondern nach Abschicken einer Antwort an den Vorgänger zunächst in den Zustand "Adaptation-Wait".

In diesem Zustand wartet das System auf den Beginn der Anpassungsphase, ausgelöst durch den Empfang einer Anpassungsnachricht. Auch dieser Zustand kann wiederum durch ein Timeout Ereignis beendet werden. Die eigentliche Anpassungsphase verläuft wie beim Initiator; allerdings wird nach Abschluss der Terminator-getriebenen Anspassungsschritts noch eine Bestätigung an den Vorgänger geschickt ("SENDRemoteAdaptACK").

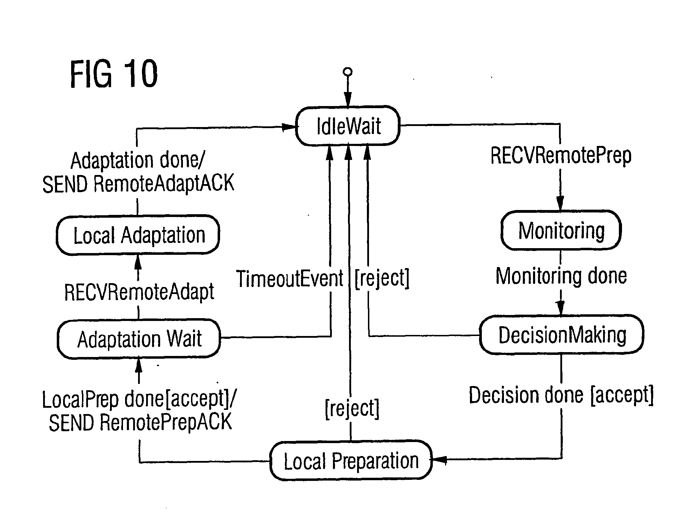

Die FIG 10 schließlich zeigt ein Zustandsdiagramm für einen Terminator. Der Ablauf des Zyklus sowie die daran beteiligten Zustände und Zustandsübergänge sind analog zum Propagator. Allerdings fehlen die Zustände "Remote Preparation" und "Remote Adaptation" sowie die mit ihnen verbundenen Zustandsübergänge. Nach Abschluss des lokalen Vorbereitungsschritts erfolgt direkt ein Übergang in den Zustand "AdaptationWait". Der Empfang einer Anpassungsnachricht ("RECVRemoteAdapt") löst einen Übergang in den Zustand "Local Adaptation" aus.

Da der Initiator- und der Terminator-getriebene lokale Anpassungsschritt hier zusammenfallen, tritt statt der beiden Zustände "Local Adaptation (initial)" und "Local Adaptation (terminal)" nur ein einziger Zustand auf. Dieser Zustand wird nach Ausführung der lokalen Anpassungsschritte sowie nach Abschicken einer Bestätigung an den Vorgänger durch einen Übergang in den Ruhezustand verlassen.

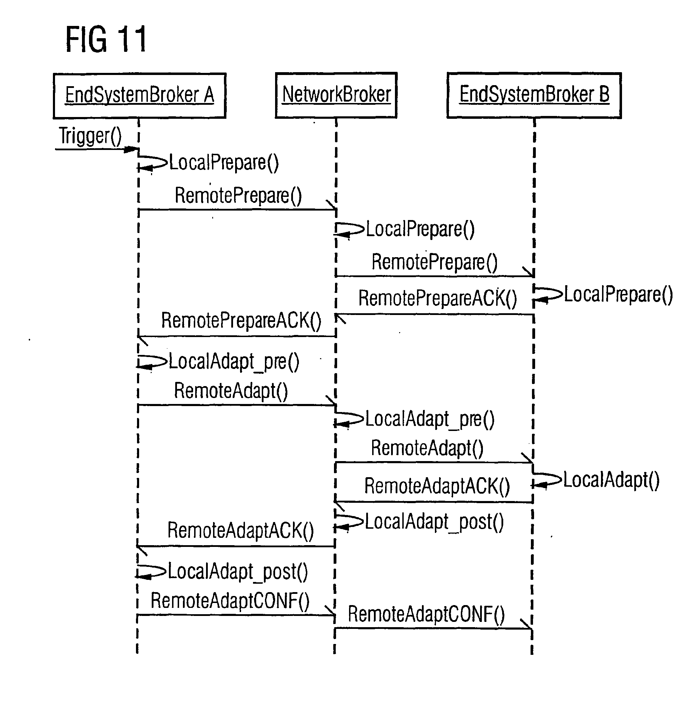

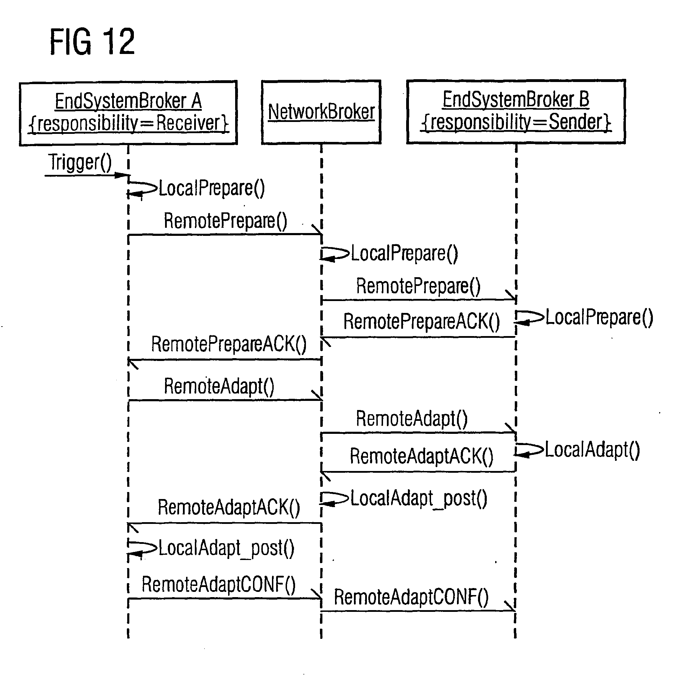

Die beiden abschließenden Darstellungen gemäß FIG 11 und FIG 12 zeigen je ein Sequenzdiagramm für eine Punkt-zu-Punkt-Verbindung, bestehend aus zwei Endsystem QoS Brokern A und B, die über einen Network QoS Broker miteinander kommunizieren. Beide Sequenzdiagramme sind im wesentlichen selbsterklärend.

Initiator der Anpassung ist in beiden Fällen der Endsystem Broker A. Die Nachricht "LocalPrepare()", die jeder Broker jeweils an sich selber schickt, steht für den lokalen Teil der Vorbereitungsphase, beinhaltet also jeweils Monitoring, Entscheidungsfindung und die eigentlichen lokalen Vorbereitungsschritte. Die Nachricht "RemotePrepare()" löst beim jeweils nächsten Broker den Beginn der Vorbereitungsphase aus. Der Terminator antwortet mit einer Bestätigung ("RemotePrepareACK"), die im Fehlerfall in der Regel noch zusätzliche Informationen enthält, die einen zweiten Anpassungsversuch erleichtern.

Der Unterschied zwischen den beiden Sequenzdiagrammen liegt in der Anpassungsphase:
FIG 11 stellt den allgemeinen Fall dar, bei dem sowohl ein Initiator-getriebener ("LocalAdapt_preo") als auch ein Terminator-getriebener ("LocalAdapt_post()") Anpassungschritt vorkommt. Diese Szenario tritt zum Beispiel auf, wenn bidirektionale Medienströme in gleicher Weise angepasst werden oder wenn ein Medienstrom eine Erhöhung und gleichzeitig ein anderer, in der gleichen Richtung verlaufender Medienstrom eine Erniedrigung der benötigten Bandbreite erfährt.

Die FIG 12 hingegen stellt einen Spezialfall dar, in dem nur ein Terminator-getriebener Anpassungsschritt vorkommt. Wie in dem Diagramm angedeutet, tritt dieses Szenario zum Beispiel beim Downgrade eines Medienstroms auf, für den der Terminator als Sender und der Initiator als Empfänger fungieren.

Nach Beendigung der Anpassung schickt der Initiator noch eine weitere Nachricht ("RemoteAdaptCONF"), die in den oben beschriebenen Zustandsdiagrammen allerdings nicht erwähnt ist. Diese Nachricht kann dazu dienen, den Terminator vom erfolgreichen Abschluss des Anpassungsvorganges zu unterrichten.

### Synonymliste:

- Idle: Wartezustand
- Trigger: Auslöseereignis
- Retry: erneuter Versuch
- Monitoring: Sammlung von Daten über den aktuellen Systemzustand
- Decision Making: vorzunehmende Anpassung
- Prepare: Nachricht zur Vorbereitung
- Local Preparation: lokaler Vorbereitungszustand
- Remote Preparation: entfernter Vorbereitungszustand
- PrepACK: Empfang einer positiven Antwort
- Local Adaptation: lokale Anpassung von Ressourcen
- Adapt: Nachricht an nächsten Broker
- Remote Adaptation: Anpassung von Ressourcen auf anderen Brokern
- AdaptACK: Nachricht zum Abschluss von Remote Adaption
- Prepare: Nachricht zum Übergang von "Idle" in "Monitoring"
- Rejection: Zurückweisung

## Patentansprüche

1. Verfahren zur dynamischen Anpassung von Ressourcen zwischen Datenströmen in einem Netzwerk mit wenigstens zwei Teilnehmern (1, 2), insbesondere in Form von Endgeräten oder in Form von einem Endgerät und einem Netzwerk-Server, die in wenigstens einer Sitzung mit einem oder mehreren aktiven Echtzeit-Datenströmen über das Netzwerk kommunizieren, wobei ein verteiltes Ressourcen-Managementsystem mit jeweiligen Ressourcen-Brokern vorgesehen ist in Form von Teilnehmer-Ressourcen-Brokern (3, 4) sowie weiteren Netzwerk-Ressourcen-Brokern (5, 6) an Netzwerkknoten (10, 11), wobei jeder Ressourcen-Broker als autonome Einheit diesem zugeordnete Ressourcen verwaltet und auf Verfügbarkeit überwacht, wobei Ressourcen-Broker entlang einer Verbindung entsprechend einer Netzwerktopologie kommunizieren und wobei Ressourcen allgemeine QoS-Anforderungen betreffen, indem
- ein Ressourcen-Broker als Initiator eine Anforderung zur Anpassung von Ressourcen auslöst, die zwischen jeweils benachbarten Ressourcen-Brokern als Propagatoren bis zu wenigstens einem Ressourcen-Broker als Terminator weitergeleitet wird, wobei
- wenigstens ein Propagator eine Verzweigung der Anforderung zur Ressourcenanpassung und eine entsprechende Zusammenführung der Antworten und/oder eine Verzweigung der Signalisierung vornimmt,
- im Zuge der Weiterleitung dieser Anforderung jeder Propagator erforderliche Ressourcen ermittelt und falls verfügbar reserviert und falls verfügbar die Anforderung in Richtung jedes Terminators weiterleitet, wobei für den Fall, dass jede Kette von Propagatoren einschließlich jedem Terminator über die erforderlichen Ressourcen verfügt, eine positive Rückantwort an den Initiator erfolgt, worauf
- dieser über die gleichen Propagatoren zu jedem Terminator eine Signalisierung sendet, auf die jeder dieser Propagatoren und Terminatoren die jeweils reservierten Ressourcen gemäß der Anforderung anpasst.

2. Verfahren zur dynamischen Anpassung von Ressourcen zwischen Datenströmen in einem Netzwerk nach Anspruch 1, wobei auf eine Anforderung Ressourcen zunächst für einen begrenzten Zeitraum vorgebucht werden und erst im Fall einer positiven Rückantwort an den Initiator vergleichsweise längerfristig reserviert werden.

3. Verfahren zur dynamischen Anpassung von Ressourcen zwischen Datenströmen in einem Netzwerk nach Anspruch 2, wobei vorgebuchte und/oder reservierte Ressourcen für eine Übermittlung aktiver Datenströme solange beibehalten werden, bis die Signalisierung erfolgt, worauf solche vorgebuchten und/oder reservierten Ressourcen zur Anpassung freigegeben werden.

4. Verfahren zur dynamischen Anpassung von Ressourcen zwischen Datenströmen in einem Netzwerk nach Anspruch 1, 2 oder 3, wobei auf dem Weg der Signalisierung vom Initiator über die beteiligten Propagatoren zu einem Terminator eine Anpassung reservierter Resourcen jeweils Propagator für Propagator bis zum Terminator vor einer jeweiligen Weitergabe der Signalisierung erfolgt.

5. Verfahren zur dynamischen Anpassung von Ressourcen zwischen Datenströmen in einem Netzwerk nach Anspruch 1, 2 oder 3, wobei die Signalisierung vom Initiator über die beteiligten Propagatoren zu einem Terminator und auf dem gleichen Weg zurück zum Initiator verläuft und eine Anpassung von Ressourcen ausgehend vom Terminator auf dem Weg zurück zum Initiator erfolgt.

6. Verfahren zur dynamischen Anpassung von Ressourcen zwischen Datenströmen in einem Netzwerk nach einem der vorangehenden Ansprüche, wobei ein Initiator eine Anforderung zur Ressourcenanpassung auf einen internen oder externen Trigger auslöst, worauf der Initiator die Entscheidung über die Art der Anpassung trifft und zustimmende oder ablehnende Antworten von Propagatoren und Terminatoren empfängt.

7. Verfahren zur dynamischen Anpassung von Ressourcen zwischen Datenströmen in einem Netzwerk nach einem der vorangehenden Ansprüche, wobei ein Propagator eine Anfrage von seinem Vorgänger in einer Kette von Propagatoren empfängt und diese Anfrage nach erfolgreicher Prüfung der Verfügbarkeit benötigter Ressourcen in seinem Zuständigkeitsbereich an seinen Nachfolger weiterleitet, worauf der Propagator auf zustimmende oder ablehnende Antwort dieses Nachfolgers wartet, bevor der Propagator diese Antwort kombiniert mit dem Ergebnis der eigenen Prüfung an seinen Vorgänger weiterleitet.

8. Verfahren zur dynamischen Anpassung von Ressourcen zwischen Datenströmen in einem Netzwerk nach einem der vorangehenden Ansprüche, wobei ein Terminator Anfragen von dem vorangehenden Propagator einer Kette von Propagatoren empfängt und diese Anfrage nach erfolgreicher Prüfung der Verfügbarkeit benötigter Ressourcen in seinem Zuständigkeitsbereich mit einer zustimmenden, ansonsten mit einer ablehnenden Antwort an den vorangehenden Propagator beantwortet.

9. Verfahren zur dynamischen Anpassung von Ressourcen zwischen Datenströmen in einem Netzwerk nach einem der vorangehenden Ansprüche, wobei Ressourcen Dienste und Anwendungen auf Teilnehmern oder im Netzwerk umfassen.

10. Ressourcen-Managementsystem zur dynamischen Anpassung von Ressourcen zwischen Datenströmen in einem Netzwerk für Kommunikationsszenarien mit
- wenigstens zwei Teilnehmern (1, 2), insbesondere in Form von Endgeräten oder in Form von einem Endgerät und einem Netzwerk-Server, die in wenigstens einer Sitzung mit einem oder mehreren aktiven Echtzeit-Datenströmen über das Netzwerk kommunizieren, mit
- jeweiligen Ressourcen-Brokern in Form von Teilnehmer-Ressourcen-Brokern (3, 4) sowie weiteren Netzwerk-Ressourcen-Brokern (5, 6) an Netzwerkknoten (10, 11), wobei mit jedem Ressourcen-Broker als autonome Einheit diesem zugeordnete Ressourcen verwaltbar und auf Verfügbarkeit überwachbar sind, wobei Ressourcen-Broker entlang einer Verbindung entsprechend einer Netzwerktopologie kommunizieren und wobei Ressourcen allgemeine QoS-Anforderungen betreffen, mit
- einem Ressourcen-Broker als Initiator, durch den eine Anforderung zur Anpassung von Ressourcen auslösbar ist, mit
- wenigstens einem Ressourcen-Broker als Terminator und mit
- einer Anzahl von benachbarten Ressourcen-Brokern zur Weiterleitung der Anforderung des Initiators in Richtung der Terminatoren, wobei
- wenigstens ein Propagator eine Verzweigung der Anforderung zur Ressourcenanpassung und eine entsprechende Zusammenführung der Antworten und/oder eine Verzweigung der Signalisierung vornimmt,
- im Zuge der Weiterleitung dieser Anforderung durch jeden Propagator erforderliche Ressourcen ermittelbar und falls verfügbar reservierbar sind, wobei
- für den Fall, dass jede Kette von Propagatoren einschließlich jedem Terminator über die erforderlichen Ressourcen verfügt, eine positive Rückantwort an den Initiator sendbar ist, worauf
- durch den Initiator über die gleichen Propagatoren zu jedem Terminator eine Signalisierung sendbar ist, auf die durch jeden dieser Propagatoren und Terminatoren die jeweils reservierten Ressourcen gemäß der Anforderung anpassbar sind.

11. Ressourcen-Managementsystem zur dynamischen Anpassung von Ressourcen zwischen Datenströmen in einem Netzwerk nach Anspruch 10, wobei durch den Initiator eine Anforderung zur Ressourcenanpassung auf einen internen oder externen Trigger auslösbar ist, worauf durch den Initiator die Art der Anpassung vorgebbar und zustimmende oder ablehnende Antworten von Propagatoren und Terminatoren empfangbar sind.

12. Ressourcen-Managementsystem zur dynamischen Anpassung von Ressourcen zwischen Datenströmen in einem Netzwerk nach Anspruch 10 oder 11, wobei durch einen Propagator Anfragen von dessen Vorgänger in einer Kette von Propagatoren empfangbar sind und solche Anfragen nach erfolgreicher Prüfung der Verfügbarkeit benötigter Ressourcen in seinem Zuständigkeitsbereich an seinen Nachfolger weiterleitbar sind, worauf durch den Propagator eine zustimmende oder ablehnende Antwort dieses Nachfolgers kombiniert mit dem Ergebnis der eigenen Prüfung an seinen Vorgänger weiterleitbar ist.

13. Ressourcen-Managementsystem zur dynamischen Anpassung von Ressourcen zwischen Datenströmen in einem Netzwerk nach Anspruch 10, 11 oder 12, wobei durch einen Terminator Anfragen von dem vorangehenden Propagator einer Kette von Propagatoren empfängbar sind und nach erfolgreicher Prüfung der Verfügbarkeit benötigter Ressourcen in seinem Zuständigkeitsbereich mit einer zustimmenden, ansonsten mit einer ablehnenden Antwort an den vorangehenden Propagator beantwortbar sind.

## Claims

1. Method for the dynamic adaptation of resources between data streams in a network having at least two subscribers (1, 2), particularly in the form of terminals or in the form of one terminal and one network server which communicate by means of one or more active real-time data streams via the network in at least one session, wherein a distributed resource management system having respective resource brokers is provided in the form of subscriber resource brokers (3, 4) and other network resource brokers (5, 6) at network nodes (10, 11), wherein each resource broker, as an autonomous unit, administers and monitors for availability resources allocated to it, wherein resource brokers communicate along a connection in accordance with a network topology and wherein resources relate to general QoS requirements, in that
- a resource broker, as initiator, triggers a request for the adaptation of resources, which is forwarded between in each case adjacent resource brokers as propagators up to at least one resource broker as terminator, wherein
- at least one propagator performs a branching of the request for resource adaptation and a corresponding combining of the replies and/or a branching of the signalling,
- in the course of the forwarding of this request, each propagator determines, and reserves if available, required resources and, if available, forwards the request in the direction of each terminator, wherein, in the case where each chain of propagators including each terminator has the required resources, a positive response to the initiator is provided, whereupon
- the latter sends to each terminator via the same propagators signalling following which each of these propagators and terminators adapts the respective reserved resources in accordance with the request.

2. Method for the dynamic adaptation of resources between data streams in a network according to Claim 1, wherein, following a request, resources are initially prebooked for a limited period and are reserved for a comparatively longer term only in the case of a positive response to the initiator.

3. Method for the dynamic adaptation of resources between data streams in a network according to Claim 2, wherein prebooked and/or reserved resources are retained for a transmission of active data streams until the signalling occurs, whereupon such prebooked and/or reserved resources are released for the adaptation.

4. Method for the dynamic adaptation of resources between data streams in a network according to Claim 1, 2 or 3, when along the way of the signalling from the initiator via the involved propagators to a terminator, an adaptation of the reserved resources occurs in each case propagator by propagator up to the terminator, before a respective forwarding of the signalling.

5. Method for the dynamic adaptation of resources between data streams in a network according to Claim 1, 2 or 3, wherein the signalling extends from the initiator via the involved propagators up to a terminator and back to the initiator along the same path and an adaptation of resources occurs starting from the terminator along the path back to the initiator.

6. Method for the dynamic adaptation of resources between data streams in a network according to one of the preceding claims, wherein an initiator triggers a request for resource adaptation to an internal or external trigger, whereupon the initiator makes the decision about the type of adaptation and receives agreeing or rejecting replies from propagators and terminators.

7. Method for the dynamic adaptation of resources between data streams in a network according to one of the preceding claims, wherein a propagator receives a request from its predecessor in a chain of propagators and forwards this request, after successfully checking the availability of needed resources within its area of responsibility, to its successor, whereupon the propagator waits for an agreeing or rejecting reply of this successor before the propagator forwards this reply combined with the result of its own check to its predecessor.

8. Method for the dynamic adaptation of resources between data streams in a network according to one of the preceding claims, wherein a terminator receives requests from the preceding propagator of a chain of propagators and replies to this request, after successfully checking the availability of needed resources within its area of responsibility, with an agreeing, otherwise with a rejecting reply to the preceding propagator.

9. Method for the dynamic adaptation of resources between data streams in a network according to one of the preceding claims, wherein resources comprise services and applications on subscribers or in the network.

10. Resource management system for the dynamic adaptation of resources between data streams in a network for communication scenarios, comprising
- at least two subscribers (1, 2), particularly in the form of terminals or in the form of one terminal and one network server, which communicate by means of one or more active real-time data streams via the network in at least one session, comprising
- respective resource brokers in the form of subscriber resource brokers (3, 4) and other network resource brokers (5, 6) at network nodes (10, 11), wherein with each resource broker as autonomous unit, resources allocated to it can be administered and monitored for availability, wherein resource brokers communicate along a connection corresponding to a network topology and wherein resources generally relate QoS requirements, comprising
- a resource broker as initiator by means of which a request for the adaptation of resources can be triggered, comprising
- at least one resource broker as terminator and comprising
- a number of adjacent resource brokers for forwarding the request of the initiator in the direction of the terminators, wherein
- at least one propagator performs a branching of the request for resource adaptation and a corresponding combining of the replies and/or a branching of the signalling,
- in the course of the forwarding of this request, required resources can be determined by each propagator and reserved, if available, wherein
- in the case where each chain of propagators including each terminator has the required resources, a positive response can be sent to the initiator, whereupon
- signalling can be sent by the initiator via the same propagators to each terminator, following which the respective reserved resources can be adapted in accordance with the request by each one of these propagators and terminators.

11. Resource management system for the dynamic adaptation of resources between data streams in a network according to Claim 10, wherein a request for resource adaptation can be triggered by the initiator to an internal or external trigger, whereupon the type of adaptation can be predetermined by the initiator and agreeing or rejecting replies can be received by propagators and terminators.

12. Resource management system for the dynamic adaptation of resources between data streams in a network according to Claim 10 or 11, wherein a propagator can receive requests from its predecessor in a chain of propagators and such requests, after a successful check of the availability of needed resources within its area of responsibility, can be forwarded to its successor, whereupon an agreeing or rejecting reply of this successor, combined with the result of its own check can be forwarded to its predecessor by the propagator.

13. Resource management system for the dynamic adaptation of resources between data streams in a network according to Claim 10, 11 or 12, wherein requests from the preceding propagator of a chain of propagators can be received by a terminator and after a successful check of the availability of needed resources within its area of responsibility can be replied to with an agreeing, otherwise with a rejecting, reply to the preceding propagator.

## Revendications

1. Procédé d'adaptation dynamique de ressources entre des flux de données dans un réseau avec au moins deux usagers (1, 2), en particulier sous la forme de terminaux ou sous la forme d'un terminal et d'un serveur de réseau qui, lors d'au moins une session, communiquent via le réseau avec un ou plusieurs flux de données actifs en temps réel, un système de gestion de ressources partagé avec des courtiers en ressources respectifs étant prévu sous la forme de courtiers en ressources usager (3, 4) ainsi que d'autres courtiers en ressources réseau (5, 6) au niveau de noeuds de réseau (10, 11), chaque courtier en ressources gérant en tant qu'unité autonome des ressources qui lui sont affectées et surveillant leur disponibilité, des courtiers en ressources communiquant le long d'une liaison conformément à une topologie de réseau et des ressources concernant des exigences générales de qualité de service, tout en étant que :
- un courtier en ressources déclenche en tant qu'initiateur une demande d'adaptation de ressources qui est retransmise entre des courtiers en ressources respectivement voisins en tant que propagateurs jusqu'à au moins un courtier en ressources en tant que terminateur ;
- au moins un propagateur opère un branchement de la demande d'adaptation de ressources et un regroupement approprié des réponses et/ou un branchement de la signalisation ;
- dans le cadre de la retransmission de cette demande, chaque propagateur détermine des ressources requises et les réserve si disponibles et, si disponibles, retransmet la demande vers chaque terminateur, une réponse positive en retour à l'initiateur ayant lieu dans le cas où chaque chaîne de propagateurs, y compris chaque terminateur, dispose des ressources requises, suite à quoi
- l'initiateur envoie à chaque terminateur, via les mêmes propagateurs, une signalisation à laquelle chacun de ces propagateurs et terminateurs adapte les ressources respectivement réservées conformément à la demande.

2. Procédé d'adaptation dynamique de ressources entre des flux de données dans un réseau selon la revendication 1, des ressources, suite à une demande, étant tout d'abord préréservées pour une période limitée et n'étant réservées pour une durée relativement plus longue qu'en cas de réponse positive en retour à l'initiateur.

3. Procédé d'adaptation dynamique de ressources entre des flux de données dans un réseau selon la revendication 2, des ressources préréservées et/ou réservées étant maintenues pour une transmission de flux de données actifs jusqu'à ce que la signalisation se produise, suite à quoi de telles ressources préréservées et/ou réservées sont libérées pour être adaptées.

4. Procédé d'adaptation dynamique de ressources entre des flux de données dans un réseau selon la revendication 1, 2 ou 3, une adaptation de ressources réservées ayant lieu, sur le chemin de la signalisation de l'initiateur vers un terminateur en passant par les propagateurs impliqués, respectivement propagateur par propagateur jusqu'au terminateur avant un transfert respectif de la signalisation.

5. Procédé d'adaptation dynamique de ressources entre des flux de données dans un réseau selon la revendication 1, 2 ou 3, la signalisation allant de l'initiateur à un terminateur en passant par les propagateurs impliqués et revenant vers l'initiateur par le même chemin, et une adaptation de ressources ayant lieu à partir du terminateur sur le chemin du retour vers l'initiateur.

6. Procédé d'adaptation dynamique de ressources entre des flux de données dans un réseau selon l'une des revendications précédentes, un initiateur déclenchant une demande d'adaptation de ressources sur un déclencheur interne ou externe, suite à quoi l'initiateur prend la décision relative au type d'adaptation et reçoit des réponses d'approbation ou de refus de propagateurs et terminateurs.

7. Procédé d'adaptation dynamique de ressources entre des flux de données dans un réseau selon l'une des revendications précédentes, un propagateur recevant une requête de son prédécesseur dans une chaîne de propagateurs et retransmettant cette requête à son successeur après un contrôle positif de la disponibilité de ressources requises dans sa zone de compétence, suite à quoi le propagateur attend une réponse d'approbation ou de refus de ce successeur avant de retransmettre à son prédécesseur cette réponse combinée au résultat de son propre contrôle.

8. Procédé d'adaptation dynamique de ressources entre des flux de données dans un réseau selon l'une des revendications précédentes, un terminateur recevant des requêtes du propagateur précédent d'une chaîne de propagateurs et répondant à cette requête après un contrôle positif de la disponibilité de ressources requises dans sa zone de compétence par une réponse d'approbation, et sinon par une réponse de refus au propagateur précédent.

9. Procédé d'adaptation dynamique de ressources entre des flux de données dans un réseau selon l'une des revendications précédentes, des ressources comprenant des services et des applications sur des usagers ou dans le réseau.

10. Système de gestion de ressources pour l'adaptation dynamique de ressources entre des flux de données dans un réseau pour des scénarios de communication, avec :
- au moins deux usagers (1, 2), en particulier sous la forme de terminaux ou sous la forme d'un terminal et d'un serveur de réseau qui, lors d'au moins une session, communiquent via le réseau avec un ou plusieurs flux de données actifs en temps réel, avec
- des courtiers en ressources respectifs sous la forme de courtiers en ressources usager (3, 4) et d'autres courtiers en ressources réseau (5, 6) au niveau de noeuds de réseau (10, 11), chaque courtier en ressources permettant, en tant qu'unité autonome, de gérer des ressources qui lui sont associées et de surveiller leur disponibilité, des courtiers en ressources communiquant le long d'une liaison conformément à une topologie de réseau et des ressources concernant des exigences générales de qualité de service, avec
- un courtier en ressources en tant qu'initiateur par lequel une demande d'adaptation de ressources peut être déclenchée, avec
- au moins un courtier en ressources en tant que terminateur et avec
- un nombre de courtiers en ressources voisins pour retransmettre la demande de l'initiateur vers les terminateurs ;
- au moins un propagateur opérant un branchement de la demande d'adaptation de ressources et un regroupement approprié des réponses et/ou un branchement de la signalisation ;
- dans le cadre de la retransmission de cette demande, des ressources requises pouvant être déterminées et, si disponibles, réservées par chaque propagateur ;
- une réponse en retour positive pouvant être envoyée à l'initiateur dans le cas où chaque chaîne de propagateurs, y compris chaque terminateur, dispose des ressources requises, suite à quoi
- peut être envoyée à chaque terminateur, par l'initiateur, via les mêmes propagateurs, une signalisation à laquelle les ressources respectivement réservées peuvent être adaptées, conformément à la demande, par chacun de ces propagateurs et terminateurs.

11. Système de gestion de ressources pour l'adaptation dynamique de ressources entre des flux de données dans un réseau selon la revendication 10, une demande d'adaptation de ressources pouvant être déclenchée par l'initiateur suite à un déclencheur interne ou externe, suite à quoi l'initiateur permet de prédéterminer le type d'adaptation et de recevoir des réponses d'approbation ou de refus de propagateurs et de terminateurs.

12. Système de gestion de ressources pour l'adaptation dynamique de ressources entre des flux de données dans un réseau selon la revendication 10 ou 11, un propagateur permettant de recevoir des requêtes de son prédécesseur dans une chaîne de propagateurs et de retransmettre ces requêtes à son successeur après un contrôle positif de la disponibilité de ressources requises dans sa zone de compétence, une réponse d'approbation ou de refus de ce successeur pouvant ensuite être retransmise par le propagateur à son prédécesseur sous forme combinée au résultat de son propre contrôle.

13. Système de gestion de ressources pour l'adaptation dynamique de ressources entre des flux de données dans un réseau selon la revendication 10, 11 ou 12, un terminateur permettant de recevoir des requêtes du propagateur précédent d'une chaîne de propagateurs et de répondre après un contrôle positif de la disponibilité de ressources requises dans sa zone de compétence par une réponse d'approbation, et sinon par une réponse de refus au propagateur précédent.
